Europäisches Patentamt

European Patent Office

Office européen des brevets

(19)

(11) EP 1 475 586 A2

(12) EUROPEAN PATENT APPLICATION

(43) Date of publication:
10.11.2004 Bulletin 2004/46

(51) Int Cl.⁷: F25B 49/02, G01K 13/02

(21) Application number: 04009181.1

(22) Date of filing: 17.04.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 30.04.2003 CN 03124153

(71) Applicant: Tekomp Technology Ltd.
Hsin-Chuan City, Taipei Hsien (TW)

(72) Inventor: Lu, Ming-Te
Yung-Ho City Taipei Hsien (TW)

(74) Representative: Hübner, Gerd, Dipl.-Phys. et al
Rau, Schneck & Hübner
Patentanwälte
Königstrasse 2
90402 Nürnberg (DE)

(54) Temperature control system for compressor exhaust

(57) A temperature control system (1) for compressor exhaust includes a data sampling unit (10), an exhaust sensor (15), a control unit (11), and a temperature adjusting unit (12) . The data sampling unit (10) obtains temperature and humidity values of an environment of the compressor (2). The exhaust sensor (15) senses exhaust temperature. The control unit (11) is coupled to the data sampling unit (10) and the exhaust sensor (15), generates a reference temperature value from the temperature and humidity values received from the data sampling unit (10), and further generates a control signal (111) from the reference temperature value and the exhaust temperature received from the exhaust sensor (15). The temperature adjusting unit (12) is coupled to the control unit (11) , and is operable so as to adjust the exhaust temperature in response to the control signal (111) received from the control unit (11).

FIG. 1

**Description**

The invention relates to a temperature control system, more particularly to a temperature control system for compressor exhaust.

During operation of a compressor, partial pressure of water vapor in a compressed working substance increases in view of a pressure increase due to compression. When the partial pressure of the water vapor exceeds a saturation pressure, the water vapor starts to condense. In this regard, the temperature at which water vapor starts to condense at ambient conditions is referred to herein as the ambient dew point, whereas the temperature at which water vapor starts to condense at pressurized conditions is referred to herein as the pressure dew point. Since the partial pressure of water vapor is increased at pressurized conditions, the dew point of a working substance after compression (i.e., the pressure dew point) is higher than the dew point of the working substance before compression (i.e. , the ambient dew point) . In general, exhaust temperature of a compressor can exceed one hundred degrees centigrade, and can even reach two hundred degrees centigrade. Under such high exhaust temperatures, water vapor in the high temperature working substance is unlikely to condense. However, when the high temperature working substance passes through a cooling device for cooling, condensation of the water vapor is possible since the temperature of the working substance could be lowered to less than the pressure dew point.

Compression in a conventional helical compressor, which is widely used in the industrial sector, is conducted in a spiral manner. Lubricant in the compression chamber not only serves to lubricate components in the compression chamber, but also serves to remove large amounts of heat generated during compression to lower the exhaust temperature. As a result, the temperature can be kept uniform during compression operation of the compressor to enhance the compression efficiency. However, since the partial pressure of water vapor is increased during the compression operation, the outlet temperature of the compressor must be controlled to be higher than a threshold value to prevent condensation of the water vapor as a result of low exhaust temperature. It is noted that accumulation of water condensate in the compressor can lead to rusting of compressor components and lubricant degradation. On the other hand, if the exhaust temperature is too high, clearances among the components of the compressor will be affected, and the service life of the lubricant will be shortened.

Therefore, to overcome the aforesaid drawbacks, a conventional temperature control valve is widely used in the helical compressor for adjusting lubricant flow in a cooling device of the compressor to thereby control the exhaust temperature. For instance, during an initial stage of compressor operation, the lubricant temperature is still low, and the control valve controls lubricant flow such that the lubricant bypasses the cooling device, as a result of which the lubricant temperature rises quickly. When the lubricant temperature reaches a certain value, the control valve feeds an amount of the lubricant to the cooling device, thereby controlling the exhaust temperature. In other words, the exhaust temperature is controlled indirectly through control of the lubricant temperature.

However, since the control valve operates within a preset temperature range, the exhaust temperature is restricted to be within a corresponding range. Hence, when it is desired to control the exhaust temperature to be outside the preset range to correspond with ambient conditions, manual adjustment of the temperature control valve must be performed. For instance, the exhaust temperature of a compressor can be controlled to 85 degrees centigrade during summertime when the temperature and humidity are normally high to prevent condensation of water vapor in the compressor exhaust. If manual seasonal adjustment of the control valve was not performed, the exhaust temperature will be controlled to the same value throughout the autumn and winter seasons. Inreality, the temperature and humidity during the autumn and winter seasons are much lower than those during summertime, and the pressure dew point for water vapor in the compressor exhaust will be lower accordingly. Hence, there is a need for a temperature control device that can automatically control the temperature of compressor exhaust to avoid condensation of watervapor while ensuring uniform temperature during compression operation of the compressor to enhance the compression efficiency, and without shortening the service life of the lubricant.

Therefore, the object of the present invention is to provide a temperature control system capable of adjusting the temperature of compressor exhaust according to detected temperature and humidity conditions so as to reduce power consumption and prolong the service life of a compressor.

According to the present invention, a temperature control system for exhaust generated by a compressor comprises a data sampling unit, an exhaust sensor, a control unit, and a temperature adjusting unit. The data sampling unit obtains temperature and humidity values of an environment of the compressor. The exhaust sensor senses exhaust temperature. The control unit is coupled to the data sampling unit and the exhaust sensor, generates a reference temperature value from the temperature and humidity values received from the data sampling unit, and further generates a control signal from the reference temperature value and the exhaust temperature received from the exhaust sensor. The temperature adjusting unit is coupled to the control unit, and is operable so as to adjust the exhaust temperature in response to the control signal received from the control unit.

Other features and advantages of the present invention will become apparent in the following detailed description of the preferred embodiment with reference to the accompanying drawings, of which:

Figure 1 is a schematic circuit block diagram of the preferred embodiment of a temperature control system for compressor exhaust according to the present invention;

Figure 2 is a schematic diagram illustrating an air compressor that incorporates the preferred embodiment of this invention; and

Figure 3 is a schematic diagram illustrating a multi-stage compressor that incorporates the preferred embodiment of this invention.

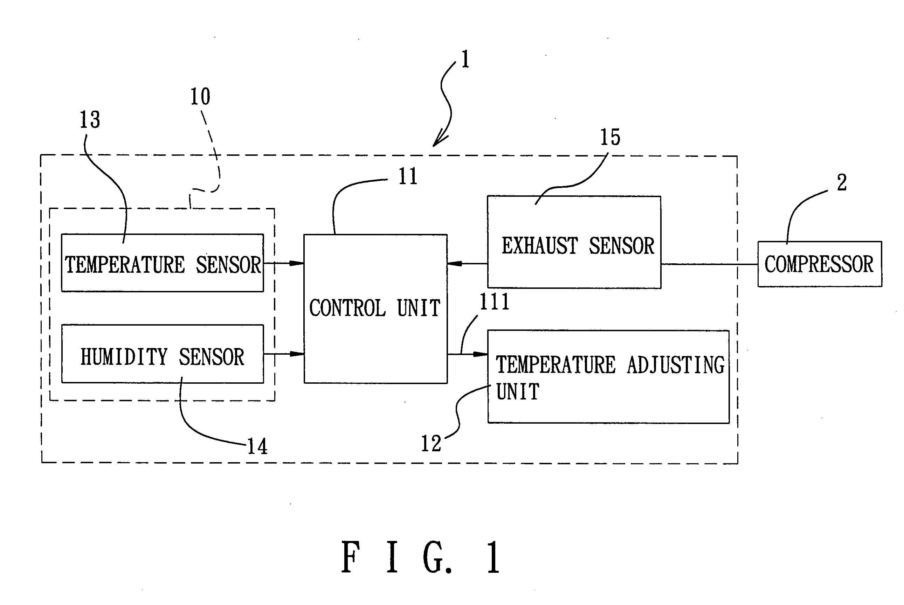

Referring to Figure 1, the preferred embodiment of a temperature control system 1 according to the present invention is shown to include a data sampling unit 10, an exhaust sensor 15, a control unit 11, and a temperature adjusting unit 12.

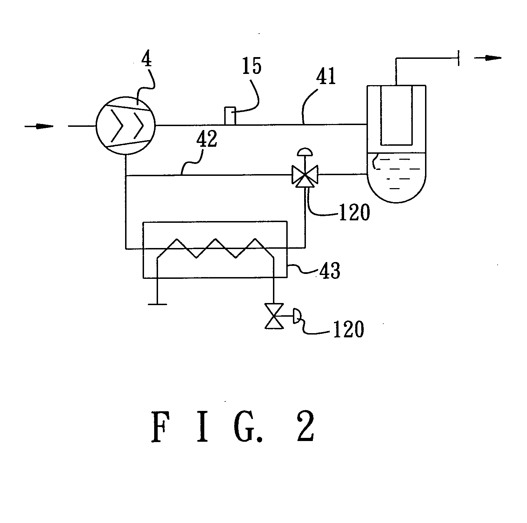

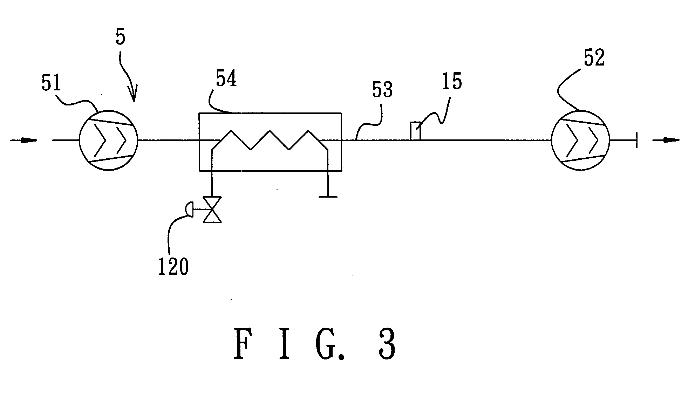

The data sampling unit 10 includes a temperature sensor 13 and a humidity sensor 14 for obtaining temperature and humidity values of an environment of a compressor 2. When the temperature control system 1 is used in an air compressor 4, such as that illustrated in Figure 2, the temperature sensor 13 and the humidity sensor 14 are used to sense ambient temperature and humidity, respectively. When the temperature control system 1 is used in a multi-stage compressor or gas compressor 5, such as that illustrated in Figure 3, the temperature sensor 13 and the humidity sensor 14 are used to sense temperature and humidity at an intake of the compressor 5, respectively.

The exhaust sensor 15 senses exhaust temperature of the compressor 2. The position of the exhaust sensor 15 on the compressor 2 can vary according to the compressor type. For example, when the present invention is applied to the helical compressor 4 of Figure 2, the exhaust sensor 15 is disposed at an exhaust pipe 41 of the compressor 4. When the present invention is applied to the multi-stage compressor or gas compressor 5 of Figure 3, the exhaust sensor 15 is disposed at an intake pipe 53 that interconnects first and second compression sections 51, 52 of the compressor 5.

The control unit 11 is coupled to the data sampling unit 10, the exhaust sensor 15, and the temperature adjusting unit 12. The control unit 11 includes a central processing unit (not shown) for calculating a pressure dew point from the temperature and humidity values received from the data sampling unit 10, and for adding a user-defined value to the pressure dew point so as to generate a reference temperature value. The user-defined value can be manually adjusted to meet actual requirements. The control unit 11 further generates a control signal 111 according to result of a comparison made thereby between the reference temperature value and the exhaust temperature received from the exhaust sensor 15.

The temperature adjusting unit 12 is coupled to the control unit 11, and is operable so as to adjust the exhaust temperature in response to the control signal 111 received from the control unit 11. In this embodiment, the temperature adjusting unit 12 includes a control valve driven by the control signal 111 and adapted to control coolant flow in the compressor 2. When the present invention is applied to the helical compressor 4 of Figure 2, the control valve 120 of the temperature adjusting unit 12 can be disposed at a supply pipe 42 or a coolant pipe 43 of the compressor 4. When the present invention is applied to the multi-stage compressor or gas compressor 5 of Figure 3, the control valve 120 of the temperature adj usting unit 12 can be disposed at a coolant pipe 54 between the first and second compression sections 51, 52 of the compressor 5. As such, when the control valve 120 is driven by the control signal 111, the flux of lubricant in the supply pipe 42 or the flux of water (or coolant) in the coolant pipe 43, 54 can be adjusted to prevent condensation of water vapor in the compressor exhaust.

In practice, the compressor 2 may employ a fin-type heat dissipater and a cooling fan instead of a circulating coolant for cooling. In this situation, the temperature adjusting unit 12 of the control system 1 of this invention can be implemented as a fan controller (not shown) driven by the control signal 111 and adapted to control speed of the cooling fan.

The temperature control system 1 of this invention is operable to adjust exhaust temperature of the compressor 4, 5 in accordance with the temperature and humidity conditions of the compressor 4, 5 such that condensation of water vapor in the compressor 4, 5 can be avoided, such that uniform temperature during compression operation of the compressor 4, 5 can be ensured so as to enhance the compression efficiency, and such that service lives of components of the compressor 4, 5 and the lubricant can be prolonged. The following supplementary calculations are provided to verify the improved effects attributed to the temperature control system 1 of this invention.

In the following situation, which takes place in the summertime, the ambient temperature is 36°C, the relative humidity is 100%, the vapor pressure is 0.06059kg/cm$^2$, and the compressor exhaust pressure is 8k:

$$0.06059 * 9 \text{ (absolute pressure = exhaust pressure}$$

$$8k + \text{atmospheric pressure } 1k) = 0.5453 \text{ kg/cm}^2.$$

The calculated pressure dew point corresponding to a compressor exhaust pressure of 8k is 83°C. Hence, a reasonable temperature for compressor exhaust control can be set to 85°C.

In another situation, which takes place in the spring or autumn season, the ambient temperature is 15°C, the relative humidity is 70%, the vapor pressure = 0.01738 (a saturated vapor pressure) * 70% = 0.01217 kg/cm$^2$, and the compressor exhaust pressure is 8k:

$$0.01217 * 9 \text{ (exhaust pressure 8k + atmospheric}$$

$$\text{pressure 1k)} = 0.1095 \text{ kg/cm}^2.$$

The calculated pressure dew point corresponding to a compressor exhaust pressure of 8k is 47°C . However, if the temperature for compressor exhaust control is maintained at 85°C ,

$$T_2/T_1 = (P_2/P_2)^{(k-1)/k},$$

$$(273+85)/(273+15) = (9\text{(absolute pressure)}/$$

$$1\text{(atmospheric pressure))}^{(k-1)/k},$$

and

$$k = 1.11.$$

Therefore, a theoretical horsepower of the compressor when the exhaust temperature is 85°C can be calculated as follows:

$$(P/0.45625)*(k/(k-1)) \ * \ [((P_2/P_1)^{(k-1)/k} \ - \ 1)]$$

$$= \ (1/0.45625)*(1.11/0.11) \ * \ [((9/1)^{(0.11/1.11)} \ - \ 1)]$$

$$= \ 5.38 \ HP/m^3/min.$$

If, instead, the temperature for compressor exhaust control is set to 54°C (which is 7°C higher than 47°C),

$$(273+54) \ / \ (273+15) = 9^{(k-1)/k},$$

and

$$k = 1.062.$$

Therefore, a theoretical horsepower of the compressor when the exhaust temperature is 54°C can be calculated as follows:

$$(1/0.45625) * (1.062/0.\,062) * [9^{(0.062/1.062)} - 1]$$

$$= 5.14 \ HP/m^3/min.$$

In yet another situation, which takes place in the winter season, the ambient temperature is 2°C, the relative humidity is 40%, the vapor pressure = 0. 007194 (a saturated vapor pressure) * 40% = 0.002878 kg/cm$^2$, and the compressor exhaust pressure is 8k:

$$0.002878 * 9 = 0.0259 \text{ kg/cm}^2.$$

The calculated pressure dew point corresponding to a compressor exhaust pressure of 8k is 21°C . Hence, if the temperature for compressor exhaust control is set to 31°C (10°C higher than 21°C),

$$(273+31)/(273+2) = 9^{(k-1)/k} ,$$

and

$$k = 1.048.$$

Therefore, a theoretical horsepower of the compressor when the exhaust temperature is 31°C can be calculated as follows:

$$(1/0.45625)*(1.048/0.48) * [9^{(0.048/1.048)} - 1]]$$

$$= 5.07 \text{ HP/m}^3/\text{min}.$$

From the foregoing, during the spring and autumn seasons, if the temperature control system 1 of this invention is applied for suitable adjustment of the compressor exhaust temperature, the horsepower saving is:

$$(5.38-5.14)/5.14=4.7\%$$

Moreover, during the winter season, more horsepower is saved:

$$(5.52-5.07)/5.07=8.9\%$$

Furthermore, if the compression efficiency is 75%, the horsepower saving during the spring and autumn seasons is:

$$4.7\%/75\%=6.3\%,$$

whereas during the winter season, the horsepower saving is:

$$8.9\%/75\%=11.9\%$$

Therefore, from the aforesaid calculations, by detecting environmental temperature and humidity for generating a reference temperature value to be compared with an exhaust temperature of the compressor and for subsequently generating a control signal to the temperature adjusting unit 12 to adjust the exhaust temperature of the compressor 2 accordingly, condensation of water vapor in the compressor 2 can be avoided, power consumption of the compressor 2 can be lowered, and the service life of the compressor 2 can be prolonged.

The following are some of the advantages of the temperature control system 1 of this invention:

1. The operating temperature of the compressor 2 can be lowered so as to increase the compression efficiency, and so as to prolong service lives of both electrical and mechanical components of the compressor 2.

2. For special working substances, the compressor 2 can operate at lower temperatures without condensation of water vapor in the compressor 2, which results in improved safety during use of the compressor 2.

3. For a multi-stage compressor, cooling of compressed gas in a preceding section will not result in water vapor condensate entering into a succeeding section, thereby minimizing the possibility of corrosion. Moreover, the intake temperature at the succeeding section can be lowered to minimize heat stress of components therein.

4. When applied to a helical compressor, better separation of oil from gas is possible. In general, the exhaust of the helical compressor has a substantial amount of oil contained therein. Hence, an appropriate mechanism must be utilized to separate oil from gas so as to prevent scattering of oil in the working environment. However, as the problem of oil-gas separation is aggravated at high temperatures, by lowering the lubricant temperature, the efficiency of separating oil from gas is improved, thereby resulting in a cleaner working environment and in lower lubricant consumption. Moreover, the helical compressor uses a large amount of lubricant for both lubrication and cooling. The service life of the lubricant is very closely related to the compressor exhaust temperature. That is, the higher the exhaust temperature, the faster will be the degradation of the lubricant. In addition, viscosity of the lubricant is inversely proportional to the compressor exhausttemperature.Lower viscosity results in a poor lubricating effect, which shortens the service lives of compressor components and which results in a poor sealing effect of compression chambers. Therefore, since the compressor exhaust temperature is appropriately adjusted through the temperature control system 1 of this invention, the service life of the lubricant can be prolonged.

**Claims**

1. A temperature control system (1) for exhaust generated by a compressor (2), **characterized by**:

   a data sampling unit (10) for obtaining temperature and humidity values of an environment of the compressor (2) ;
   an exhaust sensor (15) for sensing exhaust temperature;
   a control unit (11) coupled to said data sampling unit (10) and said exhaust sensor (15), said control unit (11) generating a reference temperature value from the temperature and humidity values received from said data sampling unit (10) , and further generating a control signal (111) from the reference temperature value and the exhaust temperature received from said exhaust sensor (15); and
   a temperature adjusting unit (12) coupled to said control unit (11) and operable so as to adj ust the exhaust temperature in response to the control signal (111) received from said control unit (11).

2. The temperature control system (1) as claimed in Claim 1, **characterized in that** said data sampling unit (10) includes a temperature sensor (13) and a humidity sensor (14) for sensing ambient temperature and humidity, respectively.

3. The temperature control system (1) as claimed in Claim 1, **characterized in that** said data sampling unit (10) includes a temperature sensor (13) and a humidity sensor (14) for sensing temperature and humidity at an intake of the compressor (5), respectively.

4. The temperature control system (1) as claimed in Claim 1, **characterized in that** said control unit (11) determines a pressure dew point from the temperature and humidity values received from said data sampling unit (10) , and generates the reference temperature value by adding a user-defined value to the pressure dew point.

5. The temperature control system (1) as claimed in Claim 1, **characterized in that** said control unit (11) generates the control signal (111) according to result of a comparison between the reference temperature value and the exhaust temperature received from said exhaust sensor (15).

6. The temperature control system (1) as claimed in Claim 1, **characterized in that** said temperature adjusting unit (12) includes a control valve (120) driven by the control signal (111) and adapted to control coolant flow in the compressor (4, 5).

F I G. 1

EP 1 475 586 A2

F I G. 2

F I G. 3